# EUROPÄISCHE PATENTSCHRIFT

(11) **EP 2 002 157 B1**
(45) Veröffentlichungstag und Bekanntmachung des Hinweises auf die Patenterteilung: **11.07.2018**
(21) Anmeldenummer: 07712328.9
(22) Anmeldetag: 27.02.2007
(51) Int. Cl.: F16H 61/04, F16H 61/12, F16H 61/686, F16H 61/20

(54) **VERFAHREN ZUM BETREIBEN EINES AUTOMATGETRIEBES**
METHOD FOR OPERATING AN AUTOMATIC GEARBOX
PROCÉDÉ POUR FAIRE FONCTIONNER UNE BOÎTE DE VITESSES AUTOMATIQUE

(30) Priorität: 31.03.2006 DE 102006014946
(43) Veröffentlichungstag der Anmeldung: 17.12.2008
(73) Patentinhaber: ZF Friedrichshafen AG, 88046 Friedrichshafen (DE)
(72) Erfinder: POPP, Christian, 88079 Kressbronn (DE); STEINHAUSER, Klaus, 88079 Kressbronn (DE); SCHMIDT, Thilo, 88074 Meckenbeuren (DE); SCHIELE, Peter, 88079 Kressbronn (DE); ALLGAIER, Bernd, 88079 Kressbronn (DE)
(86) Internationale Anmeldenummer: PCT/EP2007/051836
(87) Internationale Veröffentlichungsnummer: WO 2007/113060

(56) Entgegenhaltungen:
- DE-A1- 10 043 510
- DE-A1- 19 725 513
- US-A- 5 827 153
- US-A1- 2004 087 410
- US-A1- 2004 132 576
- US-A1- 2006 046 892

## Beschreibung

Die Erfindung betrifft ein Verfahren zum Betreiben eines Automatgetriebes nach dem Oberbegriff der Ansprüche 1, 2 und 3, wie aus der US 5 827 153 bekannt. Fahrzeuge benötigen Getriebe, um Drehmomente und Drehzahlen zu wandeln. Aufgabe eines Fahrzeuggetriebes ist es, das Zugkraftangebot eines Antriebsaggregats umzusetzen. Die hier vorliegende Erfindung betrifft ein Verfahren zum Betreiben eines Automatgetriebes. Im Sinne der hier vorliegenden Erfindung sollen unter dem Begriff Automatgetriebe alle Getriebe mit einem automatischen Gangwechsel verstanden werden, die auch als Stufenautomatgetriebe bezeichnet werden.

Bei der Entwicklung von Automatgetrieben ist ein Trend nach einer sich zunehmend vergrößernden Ganganzahl für insbesondere die Vorwärtsgänge eines Automatgetriebes feststellbar. So befinden sich derzeit Automatgetriebe mit acht Vorwärtsgängen und einem Rückwärtsgang in der Entwicklung, wobei solche Automatgetriebe über mindestens fünf Schaltelemente verfügen, und wobei zur Momentübertragung bzw. Kraftübertragung mindestens drei dieser mindestens fünf Schaltelemente in einem Vorwärtsgang sowie in einem Rückwärtsgang geschlossen sind. Beim sogenannten Gangauslegen aus einem Vorwärtsgang bzw. einem Rückwärtsgang an einem derartigen Automatgetriebe muss sicher und schonend die Momentübertragung bzw. Kraftübertragung unterbrochen werden. Bislang sind jedoch keine Verfahren zum Betreiben solcher Automatgetriebe bekannt, die ein sicheres und schonendes Gangauslegen an solchen Automatgetrieben gewährleisten.

Hiervon ausgehend liegt der vorliegenden Erfindung das Problem zu Grunde, ein neuartiges Verfahren zum Betreiben eines Automatgetriebes zu schaffen.

Nach einem ersten Aspekt der hier vorliegenden Erfindung wird dieses Problem durch ein Verfahren zum Betreiben eines Automatgetriebes gemäß einem der Ansprüche 1, 2 oder 3 gelöst. Hiernach wird beim sogenannten Gangauslegen zur Überführung des Automatgetriebes von einem Vorwärtsgang oder einem Rückwärtsgang in eine Neutralposition mindestens eines der im jeweiligen Vorwärtsgang bzw. Rückwärtsgang geschlossenen Schaltelemente des Automatgetriebes vollständig geöffnet. In einem ersten Zeitintervall wird ein erstes Schaltelement modulierend teilweise geöffnet und in einem sich anschließenden zweiten Zeitintervall wird mindestens ein zweites Schaltelement vollständig geöffnet.

Nach einem nicht beanspruchten zweiten Aspekt der hier vorliegenden Erfindung wird dieses Problem durch ein Verfahren zum Betreiben eines Automatgetriebes gelöst. Hiernach wird beim sogenannten Gangauslegen das weitere sich im Antriebsstrang befindliche Schaltelement vollständig geöffnet, wohingegen alle der im jeweiligen Vorwärtsgang bzw. Rückwärtsgang geschlossenen Schaltelemente des Automatgetriebes geschlossen bleiben.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Getriebeschema eines Automatgetriebes mit fünf Schaltelementen, bei welchem das erfindungsgemäße Verfahren vorteilhaft verwendbar ist;
- Fig. 2: eine Schaltelementmatrix für die Schaltelemente des Getriebeschemas der Fig. 1 zur Verdeutlichung welche Schaltelemente in weichem Gang geschlossen sind;
- Fig. 3: ein Ablaufdiagramm zum Gangauslegen nach einer ersten Alternative eines ersten Aspekts der hier vorliegenden Erfindung;
- Fig. 4: ein Ablaufdiagramm zum Gangauslegen nach einer zweiten Alternative des ersten Aspekts der hier vorliegenden Erfindung;
- Fig. 5: ein Ablaufdiagramm zum Gangauslegen nach einer dritten Alternative des ersten Aspekts der hier vorliegenden Erfindung;
- Fig. 6: ein Ablaufdiagramm zum Gangauslegen nach einer nicht beanspruchten vierten Alternative des ersten Aspekts der hier vorliegenden Erfindung.

Die hier vorliegende Erfindung betrifft ein Verfahren zum Betreiben eines Automatgetriebes.

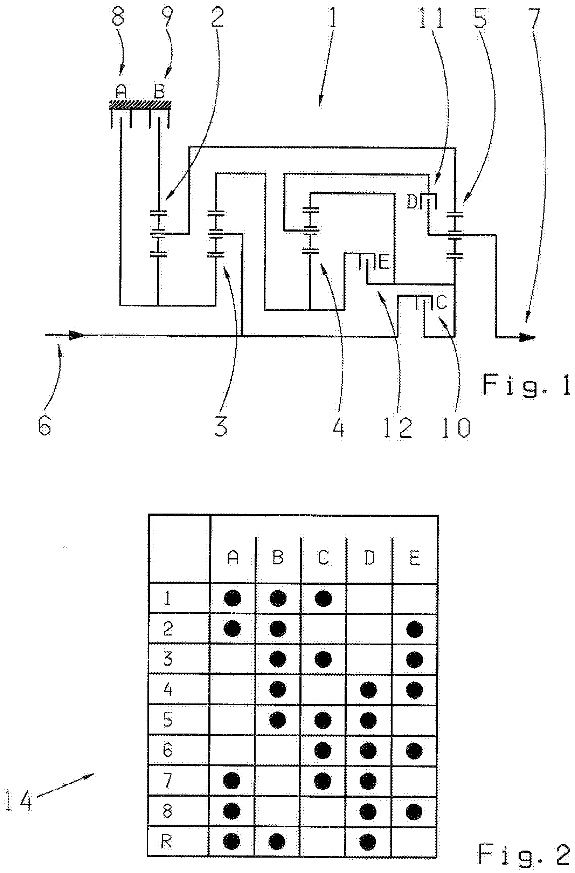

Fig. 1 zeigt ein Getriebeschema 1 eines Stufenautomatgetriebes, bei welchem das erfindungsgemäße Verfahren zum Betreiben eines Automatgetriebes bevorzugt Verwendung findet. So verfügt das Automatgetriebe der Fig. 1 über insgesamt vier Getrieberadsätze 2, 3, 4 und 5, um ein an einem Getriebeeingang 6 anliegendes Getriebeeingangsmoment in ein Getriebeausgangsmoment an einem Getriebeausgang 7 umzusetzen. Die Getrieberadsätze 2, 3, 4 und 5 des Automatgetriebes sind dabei gemäß Fig. 1 als Planetenrad-Getrieberadsätze ausgeführt.

Gemäß dem Getriebeschema 1 der Fig. 1 verfügt das Automatgetriebe neben den vier Getrieberadsätzen 2 bis 5 weiterhin über insgesamt fünf Schaltelemente 8, 9, 10, 11 und 12, wobei das Schaltelement 8 auch als Schaltelement A, das Schaltelement 9 auch als Schaltelement B, das Schaltelement 10 auch als Schaltelement C, das Schaltelement 11 auch als Schaltelement D und das Schaltelement 12 auch als Schaltelement E bezeichnet wird. Bei dem Schaltelement A sowie Schaltelement B handelt es sich jeweils um Bremsen, bei den Schaltelementen C, D und E handelt es sich jeweils um Kupplungen. Die Schaltelemente 8 bis 12 sind an sich bekannte Schaltelemente des Getrieberadsatzsystems.

Für das in Fig. 1 schematisiert dargestellte Automatgetriebe, welches die fünf Schaltelemente 8 bis 12 bzw. A bis E umfasst, können unter Verwendung der z. B. in Fig. 2 dargestellten Schaltungsmatrix 14 acht Vorwärtsgänge sowie ein Rückwärtsgang realisiert werden.

In der linken Spalte der Schaltungsmatrix 14 sind die acht Vorwärtsgänge "1" bis "8" sowie der Rückwärtsgang "R" und in der oberen Zeile der Schaltungsmatrix 14 die Schaltelemente A bis E aufgetragen. Schaltelemente, die in der Schaltelementmatrix 14 mit einem Punkt markiert sind, sind im jeweiligen Gang geschlossen. In jedem Vorwärtsgang sowie im Rückwärtsgang sind demnach jeweils drei der fünf Schaltelemente geschlossen, so z. B. für den Vorwärtsgang "1" die Schaltelemente A, B und C sowie für den Rückwärtsgang "R" die Schaltelemente A, B und D. Die jeweils anderen Schaltelemente sind hingegen vollständig geöffnet.

Zur Kraftübertragung bzw. Drehmomentübertragung vom Getriebeeingang 6 auf den Getriebeausgang 7 sind demnach bei dem in Fig. 1 dargestellten Automatgetriebe in jedem Gang drei Schaltelemente vollständig geschlossen, zwei Schaltelemente sind hingegen vollständig geöffnet.

Die hier vorliegende Erfindung stellt nun ein Verfahren zum Betreiben eines solchen Automatgetriebes bereit, um beim sogenannten Gangauslegen aus einem Vorwärtsgang bzw. einem Rückwärtsgang in die Neutralposition des Automatgetriebes sicher und schonend die Momentübertragung bzw. Kraftübertragung zu unterbrechen.

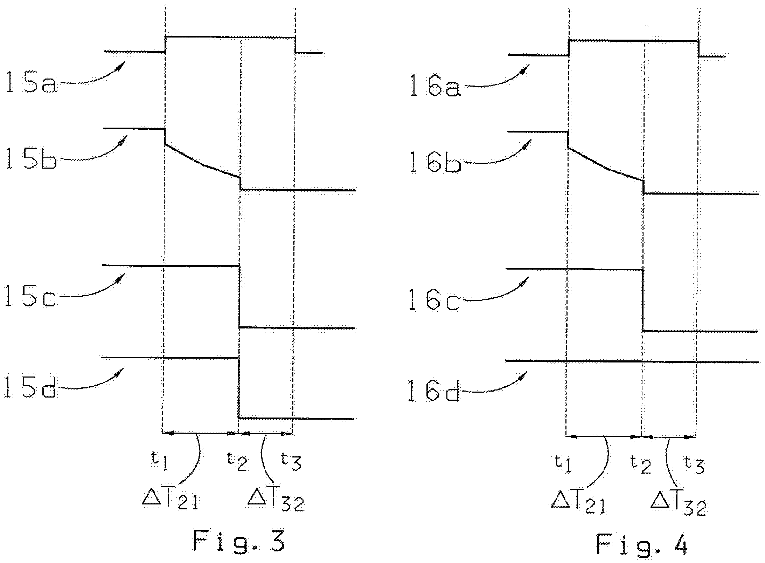

Nach einem ersten Aspekt der hier vorliegenden Erfindung wird zum Gangauslegen aus einem Vorwärtsgang bzw. einem Rückwärtsgang in die Neutralposition mindestens eines der im jeweiligen Vorwärtsgang bzw. Rückwärtsgang geschlossenen Schaltelemente des Automatgetriebes vollständig geöffnet. Dabei kann nach vier Alternativen vorgegangen werden, die nachfolgend unter Bezugnahme auf Fig. 3 bis 6 im Detail dargestellt werden.

Nach einer ersten Alternative des ersten Aspekts der hier vorliegenden Erfindung, in welchem zum Gangauslegen mindestens eines der im jeweiligen Vorwärtsgang bzw. Rückwärtsgang geschlossenen Schaltelemente des Automatgetriebes vollständig geöffnet wird, wird unter Bezugnahme auf Fig. 3 beschrieben, wobei Fig. 3 insgesamt vier zeitliche Signalverläufe 15a, 15b, 15c und 15d zeigt. Der zeitliche Signalverlauf 15a visualisiert eine Schaltungsanforderung im Sinne eines Gangauslegens, wobei durch den Signalhub zum Zeitpunkt t₁ die Anforderung des Gangauslegens von einem bis dahin eingelegten Vorwärtsgang oder Rückwärtsgang in die Neutralposition visualisiert wird. Bis zu diesem Zeitpunkt t₁ sind, wie den Signalverläufen 15b, 15c und 15d entnommen werden kann, drei Schaltelemente im entsprechenden Vorwärtsgang bzw. Rückwärtsgang vollständig geschlossen. Die zeitlichen Signalverläufe 15b, 15c und 15d verdeutlichen demnach die Ansteuerung bzw. das Verhalten der im jeweiligen Vorwärtsgang bzw. Rückwärtsgang geschlossenen Schaltelemente des Automatgetriebes.

Nach der ersten Alternative des ersten Aspekts der hier vorliegenden Erfindung wird bei Anforderung eines Gangauslegens zum Zeitpunkt t₁ im Sinne des Signalverlaufs 15b ein erstes der im Vorwärtsgang bzw. Rückwärtsgang geschlossenen Schaltelemente innerhalb eines ersten Zeitintervalls ΔT₂₁, welches durch Zeitpunkte t₂ und t₁ definiert ist, modulierend teilweise geöffnet bzw. in einen teilbefüllten Zustand überführt, und zwar derart, dass zum Zeitpunkt t₂ das erste Schaltelement kein oder annähernd kein Drehmoment überträgt, so dass die Momentübertragung bzw. Kraftübertragung des Automatgetriebes zum Zeitpunkt t₂ unterbrochen ist.

In einem sich hieran anschließenden Zeitintervall T₃₂, welches durch Zeitpunkte t₃ und t₂ definiert ist, wird nach der ersten Alternative des ersten Aspekts der hier vorliegenden Erfindung gemäß dem Signalverlauf 15b das erste Schaltelement vollständig geöffnet.

Weiterhin werden nach der ersten Alternative des ersten Aspekts der hier vorliegenden Erfindung im zweiten Zeitintervall ΔT₃₂ gemäß den Signalverläufen 15c und 15d auch ein zweites und ein drittes der im Vorwärtsgang bzw. Rückwärtsgang geschlossenen Schaltelemente vollständig geöffnet.

Das vollständige Öffnen der Schaltelemente zum Zeitpunkt t₂, in welchem bereits die Kraftübertragung bzw. Momentübertragung des Automatgetriebes unterbrochen ist, erfolgt dabei vorzugsweise stufenartig.

Nach der ersten Alternative des ersten Aspekts der hier vorliegenden Erfindung werden demnach beim Gangauslegen alle drei im jeweiligen Vorwärtsgang bzw. Rückwärtsgang geschlossenen Schaltelemente vollständig geöffnet, wobei zuerst innerhalb eines ersten Zeitintervalls ein erstes Schaltelement bis zur Unterbrechung der Momentübertragung bzw. Kraftübertragung des Automatgetriebes modulierend teilweise geöffnet wird, und wobei anschließend hieran in einem zweiten Zeitintervall alle drei Schaltelemente stufenartig vollständig geöffnet werden.

Diese erste Alternative des ersten Aspekts der hier vorliegenden Erfindung findet vor allem dann Anwendung, wenn in der Neutralposition Wert auf Sicherheit gegen Mehrfachfehler gelegt wird, wenn eine hydraulische Haltefunktion, z. B. bei Einfall in einen Notlauf, zum Einlegen einer Fahrposition führen würde, oder wenn dies aus Gründen der Getriebemechanik, z. B. wegen interner Drehzahlverhältnisse, erforderlich ist.

Im gezeigten Ausführungsbeispiel findet die erste Alternative des ersten Aspekts der hier vorliegenden Erfindung dann Anwendung, wenn das Automatgetriebe ausgehend vom Vorwärtsgang "6" in die Neutralposition überführt werden soll.

Eine zweite Alternative des ersten Aspekts der hier vorliegenden Erfindung wird nachfolgend unter Bezugnahme auf Fig. 4 beschrieben, wobei Fig. 4 wiederum vier zeitliche Signalverläufe 16a, 16b, 16c und 16d zeigt, wobei der zeitliche Signalverlauf 16a einer Schaltungsanforderung im Sinne eines Gangauslegens entspricht, und wobei die Signalverläufe 16b, 16c und 16d das Verhalten bzw. die Ansteuerung der drei im jeweiligen Vorwärtsgang bzw. Rückwärtsgang geschlossenen Schaltelemente darstellen.

Nach der zweiten Alternative des ersten Aspekts der hier vorliegenden Erfindung wird bei Vorliegen einer Schaltungsanforderung im Sinne eines Gangauslegens zum Zeitpunkt t₁ wiederum zuerst ein erstes Schaltelement im Sinne des zeitlichen Signalverlaufs 16b während eines ersten Zeitintervalls ΔT₂₁ modulierend teilweise geöffnet bzw. in einen teilbefüllten Zustand überführt, und zwar derart, dass zum Zeitpunkt t₂ dieses erste Schaltelement kein oder annähernd kein Drehmoment überträgt, so dass die Momentübertragung bzw. Kraftübertragung des Automatgetriebes zum Zeitpunkt t₂ unterbrochen ist. Im sich hieran anschließenden, zweiten Zeitintervall ΔT₃₂ wird das erste Schaltelement gemäß dem zeitlichen Signalverlauf 16b vollständig geöffnet. Weiterhin wird gemäß dem zeitlichen Signalverlauf 16c ein zweites der im Vorwärtsgang bzw. Rückwärtsgang geschlossenen Schaltelemente im zweiten Zeitintervall ΔT₃₂ vollständig geöffnet, ein drittes der im Vorwärtsgang bzw. Rückwärtsgang geschlossenen Schaltelemente bleibt hingegen im Sinne des Signalverlaufs 16d geschlossen.

Nach erfolgtem Gangauslegen sind demnach nach der zweiten Alternative des ersten Aspekts der hier vorliegenden Erfindung zwei der drei im Vorwärtsgang bzw. Rückwärtsgang zuvor geschlossenen Schaltelemente vollständig geöffnet, ein drittes dieser zuvor geschlossenen Schaltelemente bleibt hingegen geschlossen.

Diese zweite Alternative des ersten Aspekts der hier vorliegenden Erfindung findet vorzugsweise dann Anwendung, wenn in der Neutralposition Sicherheit gegenüber Einfachfehlern gewährleistet werden soll, bei gleichzeitig ausreichender Reaktionszeit bei einem anschließenden Gangeinlegen.

Im gezeigten Ausführungsbeispiel findet die zweite Alternative des ersten Aspekts der hier vorliegenden Erfindung dann Anwendung, wenn das Automatgetriebe ausgehend vom Vorwärtsgang "3" oder Vorwärtsgang "4" oder Vorwärtsgang "5" oder Vorwärtsgang "7" oder Vorwärtsgang "8" in die Neutralposition beim Gangauslegen überführt werden soll.

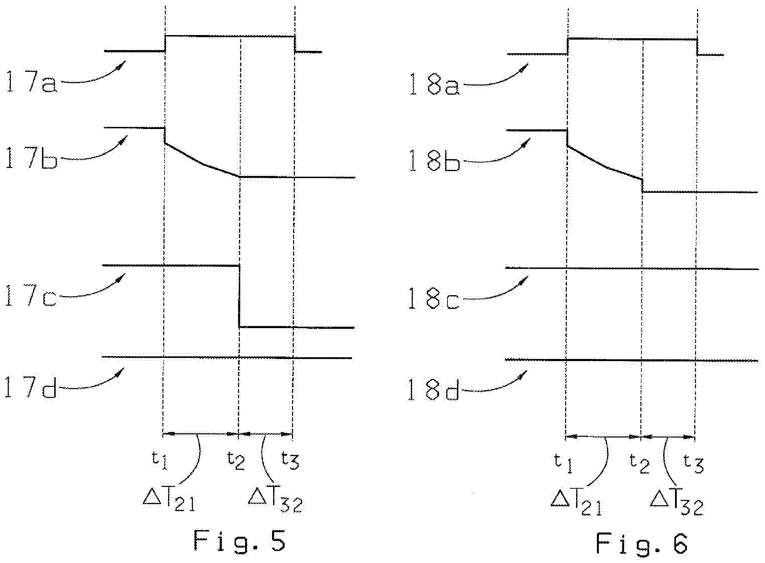

Eine dritte Alternative des ersten Aspekts der Erfindung ergibt sich aus Fig. 5, die wiederum vier zeitliche Signalverläufe zeigt, nämlich den Signalverlauf 17a, der eine Schaltungsanforderung im Sinne eines Gangauslegens zum Zeitpunkt t₁ visulaisiert, sowie die Signalverläufe 17b, 17c und 17d, welche die Ansteuerung bzw. das Verhalten der drei im Vorwärtsgang bzw. Rückwärtsgang geschlossenen Schaltelemente visualisieren.

So wird nach der dritten Alternative des ersten Aspekts gemäß Fig. 5 nach dem Signalverlauf 17b bei Anforderung eines Gangauslegens zum Zeitpunkt t₁ wiederum im Sinne des Signalverlaufs 17b während eines ersten Zeitintervalls ΔT₂₁ ein erstes Schaltelement modulierend teilweise geöffnet bzw. in einen teilbefüllten Zustand überführt, nämlich derart, dass zum Zeitpunkt t₂ dasselbe kein bzw. annähernd kein Drehmoment überträgt und damit die Momentübertragung bzw. Kraftübertragung des Automatgetriebes unterbrochen wird.

In dem sich hieran anschließenden zweiten Zeitintervall ΔT₃₂ bleibt dieses erste Schaltelement gemäß dem Signalverlauf 17b teilweise geöffnet, ein zweites der im Vorwärtsgang bzw. Rückwärtsgang geschlossenen Schaltelemente wird hingegen im Sinne des Signalverlaufs 17b zum Zeitpunkt t₂ vollständig geöffnet, ein drittes Schaltelement bleibt hingegen im Sinne des Signalverlaufs 17d geschlossen, Das Öffnen des zweiten Schaltelements zum Zeitpunkt t₂ erfolgt dabei gemäß dem Signalverlauf 17c stufenartig, nämlich erst dann, wenn zum Zeitpunkt t₂ durch das zuvor erfolgte modulierte teilweise Öffnen des ersten Schaltelements im Sinne des Signalverlaufs 17b die Momentübertragung bzw. Kraftübertragung des Automatgetriebes unterbrochen worden ist.

Diese dritte Alternative des ersten Aspekts der hier vorliegenden Erfindung findet vorzugsweise dann Verwendung, wenn in der Neutralposition ausreichend Sicherheit gegenüber Einfachfehlern gewährleistet werden soll, was zumindest bedeutet, dass ein Fahrzeuganrollen nicht möglich ist, und gleichzeitig eine gute Reaktionszeit bei einem anschließenden Gangeinlegen vorhanden sein soll.

Im gezeigten Ausführungsbeispiel findet die dritte Alternative des ersten Aspekts der hier vorliegenden Erfindung dann Anwendung, das Automatgetriebe ausgehend vom Vorwärtsgang "1" oder vom Vorwärtsgang "2" oder ausgehend vom Rückwärtsgang "R" in die Neutralposition im Sinne eines Gangauslegens zu überführen ist.

Die obigen drei Alternativen des ersten Aspekts der hier vorliegenden Erfindung werden, wie oben ausgeführt, abhängig von dem Gang, von welchem das Automatgetriebe in die Neutralposition überführt worden ist, vorzugsweise in Kombination miteinander zum Betreiben eines Automatgetriebes verwendet.

So wird für die Neutralpositionen, von denen aus standardmäßig ein Gangeinlegen absolviert wird, die Alternative (dritte Alternative) gewählt, welche die beste Reaktionszeit bietet. Für die anderen Neutralpositionen, in welchen ein Gangeinlegen standardmäßig nur während der Fahrt vorgenommen wird, wird die Alternative (zweite Alternative) gewählt, die den größeren Schwerpunkt auf Sicherheit legt, da dann die Reaktionszeit nicht so kritisch ist. Sollten hydraulische bzw. getriebemechanische Gründe vorhanden sein, die es nicht erlauben, ein Schaltelement geschlossen zu halten, so wird die erste Alternative gewählt. Eine nicht beanspruchte vierte Alternative des ersten Aspekts der hier vorliegenden Erfindung ergibt sich aus Fig. 6, die wiederum vier Signalverläufe 18a, 18b, 18c und 18d zeigt, nämlich den Signalverlauf 18a zur Visualisierung einer Schaltungsanforderung im Sinne eines Gangauslegens zum Zeitpunkt t₁ sowie die Signalverläufe 18b, 18c und 18d zur Visualisierung des Verhaltens bzw. der Ansteuerung der drei im jeweiligen Vorwärtsgang bzw. Rückwärtsgang geschlossenen Schaltelemente.

So wird nach der vierten Alternative des ersten Aspekts der hier vorliegenden Erfindung bei Vorliegen der Schaltungsanforderung des Gangauslegens zum Zeitpunkt t₁ ein erstes der im Vorwärtsgang bzw. Rückwärtsgang geschlossenen Schaltelemente im Sinne des Signalverlaufs 18d während des ersten Zeitintervalls ΔT₂₁ modulierend teilweise geöffnet bzw. in einen teilbefüllten Zustand überführt, und zwar derart, dass zum Zeitpunkt t₂ das erste Schaltelement kein oder annähernd kein Drehmoment überträgt, so dass wiederum die Momentübertragung bzw. Kraftübertragung des Automatgetriebes im Zeitpunkt t₂ unterbrochen ist. Im sich hieran anschließenden, zweiten Zeitintervall ΔT₃₂ wird darauffolgend das erste Schaltelement im Sinne des Signalverlaufs 18b vollständig geöffnet, nämlich stufenartig. Ein zweites und ein drittes der im Vorwärtsgang bzw. Rückwärtsgang geschlossenen Schaltelemente bleiben im Sinne der Signalverläufe 18b und 18d beim Gangauslegen geschlossen.

Allen vier Alternativen des ersten Aspekts der hier vorliegenden Erfindung ist gemeinsam, dass bei Anforderung eines Gangauslegens ein erstes der im jeweiligen Vorwärtsgang bzw. Rückwärtsgang geschlossenen Schaltelemente modulierend geöffnet wird.

Weiterhin ist allen vier Varianten gemeinsam, dass mindestens eines der im Vorwärtsgang bzw. Rückwärtsgang geschlossenen Schaltelemente nach erfolgtem Gangauslegen vollständig geöffnet ist.

Nach einem nicht beanspruchten zweiten Aspekt der Erfindung wird zur Ausführung eines Gangauslegens eines Automatgetriebes ein weiteres sich im Antriebsstrang befindliches Schaltelement vollständig geöffnet, wohingegen alle der im jeweiligen Vorwärtsgang bzw. Rückwärtsgang geschlossenen Schaltelemente des Automatgetriebes geschlossen bleiben. Hierzu ist es erforderlich, dass dem Automatgetriebe ein weiteres sich im Antriebsstrang befindliches Schaltelement, so z. B. ein Anfahrelement, vorgeschaltet ist, wobei derartige externe Anfahrelemente z. B. bei Parallelhybridsystemen, bei welchen ein Elektromotor und ein Verbrennungsmotor auf ein Automatgetriebe wirken, dem Automatgetriebe vorgeschaltet ist.

Die Alternativen des ersten Aspekts der Erfindung zur Ansteuerung der Schaltelemente sind mit diesem zweiten Aspekt zur Ansteuerung des weiteren Schaltelements nach dem zweiten Aspekt der Erfindung kombinierbar.

Obwohl unter Bezugnahme auf Fig. 1 und 2 die Erfindung für den bevorzugten Anwendungsfall eines Automatgetriebes mit fünf Schaltelementen, von welchen jeweils drei in einem Vorwärtsgang und einem Rückwärtsgang geschlossen sind, beschrieben wurde, sei an dieser Stelle darauf hingewiesen, dass die Erfindung auch bei Automatgetrieben mit einer größeren Anzahl von Schaltelementen verwendet werden kann, und zwar auch dann, wenn pro Gang eine größere Anzahl an Schaltelementen geschlossen ist. Für diesen Fall werden die Anzahl der offenen bzw. teilbefüllten Schaltelemente auf diese Systeme übertragen und die zusätzlichen Schaltelemente geschlossen gehalten, sodass zu dem oben beschriebenen Verfahren dann nur die Anzahl der geschlossenen Schaltelemente unterschiedlich ist.

Abschließend sei darauf hingewiesen, dass die Schaltelemente A bis E bzw. 8 bis 12, die nach dem ersten Aspekt der Erfindung angesteuert werden, auch als getriebeinterne bzw. als getrieberadsatzsysteminterne Schaltelemente bezeichnet werden können, wohingegen dann das weitere sich im Antriebsstrang befindliche Schaltelement, welches beim zweiten Aspekt der Erfindung von Bedeutung ist, als getriebeexternes bzw. als getrieberadsatzsystemexternes Schaltelement bezeichnet werden kann.

### Bezugszeichen

- 1: Getriebeschema
- 2: Getrieberadsatz
- 3: Getrieberadsatz
- 4: Getrieberadsatz
- 5: Getrieberadsatz
- 6: Getriebeeingang
- 7: Getriebeausgang
- 8: Schaltelement A
- 9: Schaltelement B
- 10: Schaltelement C
- 11: Schaltelement D
- 12: Schaltelement E
- 14: Schaltelementmatrix
- 15a: Signalverlauf
- 15b: Signalverlauf
- 15c: Signalverlauf
- 15d: Signalverlauf
- 16a: Signalverlauf
- 16b: Signalverlauf
- 16c: Signalverlauf
- 16d: Signalverlauf
- 17a: Signalverlauf
- 17b: Signalverlauf
- 17c: Signalverlauf
- 17d: Signalverlauf
- 18a: Signalverlauf
- 18b: Signalverlauf
- 18c: Signalverlauf
- 18d: Signalverlauf

## Patentansprüche

1. Verfahren zum Betreiben eines Automatgetriebes eines Kraftfahrzeugs, insbesondere eines Stufenautomatgetriebes,
wobei das Automatgetriebe mindestens fünf Schaltelemente aufweist,
wobei zur Drehmomentübertragung bzw. Kraftübertragung in einem Vorwärtsgang und in einem Rückwärtsgang mindestens drei Schaltelemente geschlossen sind,
und wobei beim Gangauslegen zur Überführung des Automatgetriebes von einem Vorwärtsgang oder einem Rückwärtsgang in eine Neutralposition mindestens eines der im jeweiligen Vorwärtsgang bzw. Rückwärtsgang geschlossenen Schaltelemente des Automatgetriebes vollständig geöffnet wird, **dadurch gekennzeichnet,**
**dass** beim Gangauslegen ein erstes der im Vorwärtsgang bzw. Rückwärtsgang geschlossenen Schaltelemente von allen beim Gangauslegen zu öffnenden Schaltelementen zuerst geöffnet wird,
**dass** dieses erste Schaltelement in einem ersten Zeitintervall modulierend teilweise geöffnet bzw. modulierend in einen teilbefüllten Zustand überführt wird,
derart, dass von demselben kein oder annähend kein Drehmoment übertragen und damit die Momentübertragung bzw. Kraftübertragung des Automatgetriebes unterbrochen wird,
**dass** in einem sich an das erste Zeitintervall anschließenden zweiten Zeitintervall dieses erste Schaltelement ausgehend von der teilweisen Öffnung vollständig geöffnet wird,
und **dass** in dem zweiten Zeitintervall ein zweites und ein drittes der im Vorwärtsgang bzw. Rückwärtsgang geschlossenen Schaltelemente vollständig geöffnet werden.

2. Verfahren zum Betreiben eines Automatgetriebes eines Kraftfahrzeugs, insbesondere eines Stufenautomatgetriebes,
wobei das Automatgetriebe mindestens fünf Schaltelemente aufweist,
wobei zur Drehmomentübertragung bzw. Kraftübertragung in einem Vorwärtsgang und in einem Rückwärtsgang mindestens drei Schaltelemente geschlossen sind,
und wobei beim Gangauslegen zur Überführung des Automatgetriebes von einem Vorwärtsgang oder einem Rückwärtsgang in eine Neutralposition mindestens eines der im jeweiligen Vorwärtsgang bzw. Rückwärtsgang geschlossenen Schaltelemente des Automatgetriebes vollständig geöffnet wird, **dadurch gekennzeichnet,**
**dass** beim Gangauslegen ein erstes der im Vorwärtsgang bzw. Rückwärtsgang geschlossenen Schaltelemente von allen beim Gangauslegen zu öffnenden Schaltelementen zuerst geöffnet wird,
**dass** dieses erste Schaltelement in einem ersten Zeitintervall modulierend teilweise geöffnet bzw. modulierend in einen teilbefüllten Zustand überführt wird,
derart, dass von demselben kein oder annähend kein Drehmoment übertragen und damit die Drehmomentübertragung bzw. Kraftübertragung des Automatgetriebes unterbrochen wird,
**dass** in einem sich an das erste Zeitintervall anschließenden zweiten Zeitintervall dieses erste Schaltelement ausgehend von der teilweisen Öffnung vollständig geöffnet wird,
und **dass** in dem zweiten Zeitintervall ein zweites der im Vorwärtsgang bzw. Rückwärtsgang geschlossenen Schaltelemente vollständig geöffnet wird,
wohingegen ein drittes der im Vorwärtsgang bzw. Rückwärtsgang geschlossenen Schaltelemente in dem zweiten Zeitintervall geschlossen bleibt.

3. Verfahren zum Betreiben eines Automatgetriebes eines Kraftfahrzeugs, insbesondere eines Stufenautomatgetriebes,
wobei das Automatgetriebe mindestens fünf Schaltelemente aufweist,
wobei zur Drehmomentübertragung bzw. Kraftübertragung in einem Vorwärtsgang und in einem Rückwärtsgang mindestens drei Schaltelemente geschlossen sind,
und wobei beim Gangauslegen zur Überführung des Automatgetriebes von einem Vorwärtsgang oder einem Rückwärtsgang in eine Neutralposition mindestens eines der im jeweiligen Vorwärtsgang bzw. Rückwärtsgang geschlossenen Schaltelemente des Automatgetriebes vollständig geöffnet wird, **dadurch gekennzeichnet,**
**dass** beim Gangauslegen ein erstes der im Vorwärtsgang bzw. Rückwärtsgang geschlossenen Schaltelemente von allen beim Gangauslegen zu öffnenden Schaltelementen zuerst geöffnet wird,
**dass** dieses erste Schaltelement in einem ersten Zeitintervall modulierend teilweise geöffnet bzw. modulierend in einen teilbefüllten Zustand überführt wird,
derart, dass von demselben kein oder annähend kein Drehmoment übertragen und damit die Drehmomentübertragung bzw. Kraftübertragung des Automatgetriebes unterbrochen wird,
und **dass** in einem sich an das erste Zeitintervall anschließenden zweiten Zeitintervall dieses erste Schaltelement teilbefüllt bleibt, ein zweites der im Vorwärtsgang bzw. Rückwärtsgang geschlossenen Schaltelemente vollständig geöffnet wird und ein drittes der im Vorwärtsgang bzw. Rückwärtsgang geschlossenen Schaltelemente geschlossen bleibt.

4. Verfahren nach Anspruch 1, 2 oder 3, **dadurch gekennzeichnet,**
**dass** dann, wenn im zweiten Zeitintervall das zweite Schaltelement und/oder das dritte Schaltelement zu öffnen ist, das jeweilige Schaltelement stufenartig geöffnet wird.

5. Verfahren nach einem der Ansprüche 1 bis 4, **dadurch gekennzeichnet, dass** das Automatgetriebe genau fünf Schaftelemente aufweist, von denen in jedem Vorwärtsgang und im Rückwärtsgang drei Schaltelemente geschlossen sind.

## Claims

1. Method for operating an automatic transmission of a motor vehicle, in particular a multi-stage automatic transmission,
wherein the automatic transmission has at least five shift elements, wherein, for the transmission of torque or transmission of power in a forward gear ratio and in a reverse gear ratio, at least three shift elements are closed,
and wherein, during the gear ratio disengagement for the transfer of the automatic transmission from a forward gear ratio or a reverse gear ratio into a neutral position, at least one of the shift elements of the automatic transmission that is closed in the respective forward gear ratio or reverse gear ratio is fully opened,
**characterized**
**in that**, during the gear ratio disengagement, a first of the shift elements that is closed in the forward gear ratio or reverse gear ratio out of all of the shift elements to be opened during the gear ratio disengagement is opened first,
**in that** said first shift element is, in a first time interval, partially opened in modulated fashion or transferred into a partially filled state in modulated fashion,
in such a way that no torque or approximately no torque is transmitted by said first shift element and thus the transmission of torque or transmission of power of the automatic transmission is interrupted,
**in that**, in a second time interval following the first time interval, said first shift element is fully opened proceeding from the partial opening,
and **in that**, in the second time interval, a second and a third of the shift elements that are closed in the forward gear ratio or reverse gear ratio are fully opened.

2. Method for operating an automatic transmission of a motor vehicle, in particular a multi-stage automatic transmission,
wherein the automatic transmission has at least five shift elements, wherein, for the transmission of torque or transmission of power in a forward gear ratio and in a reverse gear ratio, at least three shift elements are closed,
and wherein, during the gear ratio disengagement for the transfer of the automatic transmission from a forward gear ratio or a reverse gear ratio into a neutral position, at least one of the shift elements of the automatic transmission that is closed in the respective forward gear ratio or reverse gear ratio is fully opened,
**characterized**
**in that**, during the gear ratio disengagement, a first of the shift elements that is closed in the forward gear ratio or reverse gear ratio out of all of the shift elements to be opened during the gear ratio disengagement is opened first,
**in that** said first shift element is, in a first time interval, partially opened in modulated fashion or transferred into a partially filled state in modulated fashion,
in such a way that no torque or approximately no torque is transmitted by said first shift element and thus the transmission of torque or transmission of power of the automatic transmission is interrupted,
**in that**, in a second time interval following the first time interval, said first shift element is fully opened proceeding from the partial opening,
and **in that**, in the second time interval, a second of the shift elements that are closed in the forward gear ratio or reverse gear ratio is fully opened,
whereas a third of the shift elements that are closed in the forward gear ratio or reverse gear ratio remains closed in the second time interval.

3. Method for operating an automatic transmission of a motor vehicle, in particular a multi-stage automatic transmission,
wherein the automatic transmission has at least five shift elements, wherein, for the transmission of torque or transmission of power in a forward gear ratio and in a reverse gear ratio, at least three shift elements are closed,
and wherein, during the gear ratio disengagement for the transfer of the automatic transmission from a forward gear ratio or a reverse gear ratio into a neutral position, at least one of the shift elements of the automatic transmission that is closed in the respective forward gear ratio or reverse gear ratio is fully opened,
**characterized**
**in that**, during the gear ratio disengagement, a first of the shift elements that is closed in the forward gear ratio or reverse gear ratio out of all of the shift elements to be opened during the gear ratio disengagement is opened first,
**in that** said first shift element is, in a first time interval, partially opened in modulated fashion or transferred into a partially filled state in modulated fashion,
in such a way that no torque or approximately no torque is transmitted by said first shift element and thus the transmission of torque or transmission of power of the automatic transmission is interrupted,
and **in that**, in a second time interval following the first time interval, said first shift element remains partially filled, a second of the shift elements that are closed in the forward gear ratio or reverse gear ratio is fully opened, and a third of the shift elements that are closed in the forward gear ratio or reverse gear ratio remains closed.

4. Method according to Claim 1, 2 or 3, **characterized in that**, when the second shift element and/or the third shift element is to be opened in the second time interval, the respective shift element is opened in stepped fashion.

5. Method according to one of Claims 1 to 4, **characterized in that** the automatic transmission has exactly five shift elements, of which three shift elements are closed in each forward gear ratio and in the reverse gear ratio.

## Revendications

1. Procédé pour faire fonctionner une boîte de vitesses automatique d'un véhicule automobile, en particulier une boîte de vitesses automatique étagée,
la boîte de vitesses automatique présentant au moins cinq éléments de commutation,
au moins trois éléments de commutation étant fermés pour le transfert de couple ou le transfert de force dans un rapport de marche avant et dans un rapport de marche arrière,
et lors d'une sortie de rapport, pour le transfert de la boîte de vitesses automatique d'un rapport de marche avant ou d'un rapport de marche arrière dans une position neutre, au moins l'un des éléments de commutation de la boîte de vitesses automatique fermés dans le rapport de marche avant ou le rapport de marche arrière respectif étant complètement ouvert,
**caractérisé en ce que**
lors de la sortie de rapport, un premier des éléments de commutation fermés dans le rapport de marche avant ou dans le rapport de marche arrière parmi tous les éléments de commutation devant être ouverts lors de la sortie de rapport est ouvert en premier,
**en ce que** ce premier élément de commutation est en partie ouvert de manière modulée dans un premier intervalle de temps ou est transféré de manière modulée dans un état de remplissage partiel de telle sorte qu'aucun ou presque aucun couple ne soit transmis par celui-ci et que le transfert de couple ou le transfert de force de la boîte de vitesses automatique soit interrompu,
**en ce que** dans un deuxième intervalle de temps suivant le premier intervalle de temps, ce premier élément de commutation est ouvert complètement à partir de l'ouverture partielle,
et **en ce que** dans le deuxième intervalle de temps, un deuxième et un troisième élément de commutation fermés dans le rapport de marche avant ou dans le rapport de marche arrière sont complètement ouverts.

2. Procédé pour faire fonctionner une boîte de vitesses automatique d'un véhicule automobile, en particulier une boîte de vitesses automatique étagée,
la boîte de vitesses automatique présentant au moins cinq éléments de commutation,
au moins trois éléments de commutation étant fermés pour le transfert de couple ou le transfert de force dans un rapport de marche avant et dans un rapport de marche arrière,
et lors de la sortie de rapport pour le transfert de la boîte de vitesses automatique d'un rapport de marche avant ou d'un rapport de marche arrière dans une position neutre, au moins l'un des éléments de commutation de la boîte de vitesses automatique fermés dans le rapport de marche avant respectif ou le rapport de marche arrière respectif étant complètement ouvert,
**caractérisé en ce que**
lors de la sortie de rapport, un premier des éléments de commutation fermés dans le rapport de marche avant ou dans le rapport de marche arrière parmi tous les éléments de commutation devant être ouverts lors de la sortie de rapport est ouvert en premier,
**en ce que** ce premier élément de commutation est en partie ouvert de manière modulée dans un premier intervalle de temps ou est transféré de manière modulée dans un état de remplissage partiel de telle sorte qu'aucun ou presque aucun couple ne soit transmis par celui-ci et que le transfert de couple ou le transfert de force de la boîte de vitesses automatique soit interrompu,
**en ce que** dans un deuxième intervalle de temps suivant le premier intervalle de temps, ce premier élément de commutation est ouvert complètement à partir de l'ouverture partielle,
et **en ce que** dans le deuxième intervalle de temps, un deuxième des éléments de commutation fermés dans le rapport de marche avant ou dans le rapport de marche arrière est complètement ouvert, tandis qu'un troisième des éléments de commutation fermés dans le rapport de marche avant ou dans le rapport de marche arrière reste fermé dans le deuxième intervalle de temps.

3. Procédé pour faire fonctionner une boîte de vitesses automatique d'un véhicule automobile, en particulier une boîte de vitesses automatique étagée,
la boîte de vitesses automatique présentant au moins cinq éléments de commutation,
au moins trois éléments de commutation étant fermés pour le transfert de couple ou le transfert de force dans un rapport de marche avant et dans un rapport de marche arrière,
et lors de la sortie de rapport pour le transfert de la boîte de vitesses automatique d'un rapport de marche avant ou d'un rapport de marche arrière dans une position neutre, au moins l'un des éléments de commutation de la boîte de vitesses automatique fermés dans le rapport de marche avant respectif ou le rapport de marche arrière respectif étant complètement ouvert,
**caractérisé**
**en ce que** lors de la sortie de rapport, un premier des éléments de commutation fermés dans le rapport de marche avant ou dans le rapport de marche arrière parmi tous les éléments de commutation devant être ouverts lors de la sortie de rapport est ouvert en premier,
**en ce que** ce premier élément de commutation est en partie ouvert de manière modulée dans un premier intervalle de temps ou est transféré de manière modulée dans un état de remplissage partiel de telle sorte qu'aucun ou presque aucun couple ne soit transmis par celui-ci et que le transfert de couple ou le transfert de force de la boîte de vitesses automatique soit interrompu,
**en ce que** dans un deuxième intervalle de temps suivant le premier intervalle de temps, ce premier élément de commutation reste partiellement rempli, un deuxième des éléments de commutation fermés dans le rapport de marche avant ou dans le rapport de marche arrière est complètement ouvert et un troisième des éléments de commutation fermés dans le rapport de marche avant ou le rapport de marche arrière reste fermé.

4. Procédé selon la revendication 1, 2 ou 3, **caractérisé en ce que**, lorsque, pendant le deuxième intervalle de temps, le deuxième élément de commutation et/ou le troisième élément de commutation doit être ouvert, l'élément de commutation respectif est ouvert de manière échelonnée.

5. Procédé selon l'une quelconque des revendications 1 à 4, **caractérisé en ce que** la boîte de vitesses automatique présente exactement cinq éléments de commutation dont trois éléments de commutation sont fermés dans chaque rapport de marche avant et dans le rapport de marche arrière.
